# EUROPEAN PATENT APPLICATION

(11) **EP 0 737 882 A2**
(43) Date of publication of application: **16.10.1996**
(21) Application number: 96105647.0
(22) Date of filing: 10.04.1996
(51) Int. Cl.: G02F 1/139, G02F 1/1335

(54) **Reflection type guest-host liquid crystal display**

(30) Priority: 11.04.1995 JP 110183/95
(71) Applicant: SONY CORPORATION, Tokyo (JP)
(72) Inventor: Urabe, Tetsuo, c/o Sony Corp., Tokyo (JP)
(74) Representative: TER MEER - MÜLLER - STEINMEISTER & PARTNER

(57) **Abstract**

A reflection type guest-host liquid crystal display includes a first substrate having transparent electrodes, a second substrate having reflection electrodes, and an electro-optic body held between the first and second substrates. The electro-optic body has a guest-host liquid crystal layer containing a dichroic dye and an optical thin film layer. The liquid crystal layer is changed between an absorption state and a transmission state. The liquid crystal layer in the absorption state absorbs a first oscillating component of an incident light and passes a second oscillating component perpendicular to the first oscillating component, while said liquid crystal layer in the transmission state passes both the first and second oscillating components. The optical thin film layer converts the second oscillating component into the first oscillating component and allows the first oscillating component thus converted to re-enter said liquid crystal layer in the absorption state. All of the oscillating components are thus absorbed by the liquid crystal layer, to thereby increase brightness of a screen without provision of a polarizing plate.

## Description

### BACKGROUND OF THE INVENTION

The present invention relates to a reflection type guest-host liquid crystal display, and particularly to a reflection type guest-host liquid crystal display improved in availability of an incident light by eliminating a polarizing plate.

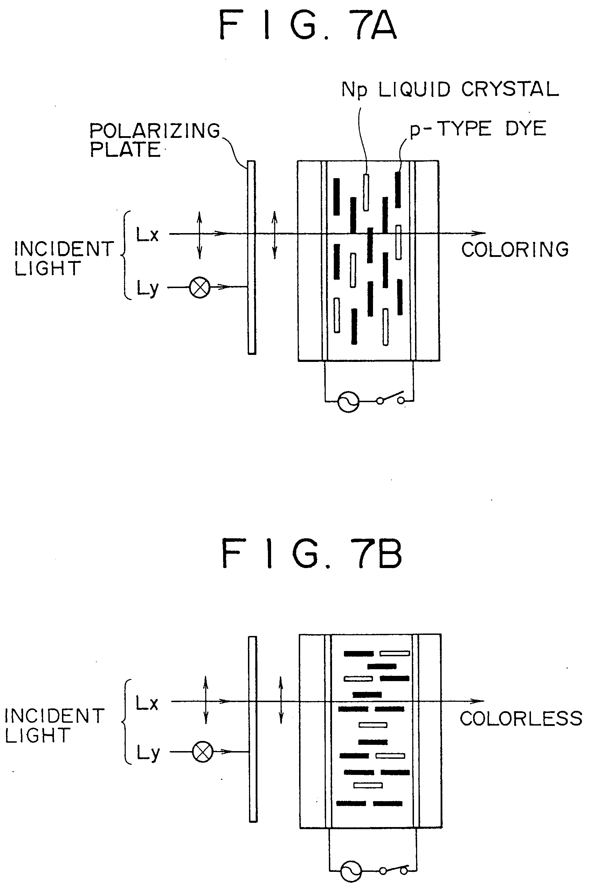

Liquid crystal displays have various modes, which are represented by a TN mode using a twisted nematic liquid crystal and a STN mode using a super-twisted nematic liquid crystal. Such a mode requires a pair of polarizing plates on the operating principle of the mode, and consequently it fails to obtain a bright display screen because of low transmissivity of light due to the light absorption of the polarizing plates. A guest-host mode using a dichroic dye has been also developed, in addition to the above modes. The liquid crystal display having a guest-host mode is adapted to obtain a display screen using an anisotropy of the absorption coefficient of a dichroic dye added in a liquid crystal. A dichroic dye having a bar-structure has dye molecules oriented in parallel to liquid crystal molecules. When the orientation of liquid crystal molecules is changed by applying an electric field, the orientation of molecules of the dichroic dye is also changed. The dye is colored or not colored in accordance with the orientation thereof, so that the liquid crystal display can be switched between a colored state and a colorless state by applying a voltage. Figs. 7A and 7B show the structure of an Heilmeier type guest-host liquid crystal display, wherein Fig. 7A shows a voltage not applied state and Fig. 7B shows a voltage applied state. The display of this type uses a p-type dye and a nematic liquid crystal having a positive dielectric anisotropy (N_{P} liquid crystal). The p-type dichroic dye having an absorption axis substantially parallel to the molecular axis strongly absorbs a polarized component Lx parallel to the molecular axis and little absorbs a polarized component Ly perpendicular to the polarized component Lx. In the voltage not applied state shown in Fig. 7A, the polarized component Lx contained in an incident light is strongly absorbed by the p-type dye, so that the liquid crystal display is colored. On the contrary, in the voltage applied state shown in Fig. 7B, molecules of the Np liquid crystal having the positive dielectric anisotropy are raised in response to an electric field applied thereto, and molecules of the p-type die are also arranged in the vertical direction, as a result of which the polarized component Lx is little absorbed by the p-type dye and thereby the liquid crystal display is not colored. On the other hand, the polarized component Ly contained in the incident light is never absorbed by the dichroic dye neither in the voltage not applied state nor in the voltage applied state. For this reason, the Heilmeier type guest-host liquid crystal display is so designed that a polarizing plate is previously interposed for removing the polarized component Ly.

In a guest-host liquid crystal display using a nematic liquid crystal, molecules of a dichroic dye added as a guest are oriented in the same orientation as that of molecules of the nematic liquid crystal. The dichroic dye thus absorbs a polarized component parallel to the orientation of molecules of the liquid crystal; however, it does not absorb a polarized component perpendicular thereto. Accordingly, to obtain a sufficient contract, one polarizing plate is disposed on the light incident side of the liquid crystal display for allowing the polarizing direction of an incident light to correspond to the orientation of molecules of the liquid crystal. The provision of such a polarizing plate, however, is disadvantageous in that 50% of the incident light (this is a theoretical value and is about 40% in practice) loses by the polarizing plate, with a result that the display becomes dark just as the TN mode. However, if the polarizing plate is simply removed for solving such a disadvantage, the on/off ratio of absorbance is significantly reduced. From this viewpoint, various improving structures have been proposed. For example, a structure has been proposed in which the polarizing plate is removed from the light incident side and a quarter-wave plate and a reflection plate are mounted on the light outgoing side. This structure has a feature that two polarized components perpendicular to each other are rotated in the polarized direction by 90° in the going/returning path for replacing the polarized components with each other. As a result, in the off-state (absorption state), each polarized component is absorbed in either the going path or the returning path. Such a structure, however, is inconvenient in that since the quarter-wave plate and the reflection plate are mounted outside the display, the display must be of a transmission type. In particular, for the display having an active matrix structure for displaying a high precise and moving image, thin film transistors for driving pixel electrodes are integratedly formed on a substrate. In this case, the transmission type is undesirable because the aperture ratio of pixels is low and thereby most of an incident light is shielded. Consequently, the screen of the display cannot be significantly made bright even by removal of the polarizing plate. Another structure of eliminating the polarizing plate has been known in which all of polarized components contained in an incident light can be absorbed using a cholesteric liquid crystal. This structure, however, has a disadvantage that a half tone cannot be displayed because of a strong hysteresis of the cholesteric liquid crystal.

### SUMMARY OF THE INVENTION

An object of the present invention is to provide a reflection type guest-host liquid crystal display capable of enhancing brightness of a screen without provision of a polarizing plate.

To achieve the above object, according to a first aspect of the present invention, there is provided a reflection type guest-host liquid crystal display including: a first substrate for receiving an incident light, which has transparent electrodes formed thereon; a second substrate disposed opposite to the first substrate at a specified interval, which has reflection electrodes formed thereon; and an electro-optic body for performing light modulation in response to a voltage applied between the transparent electrode and the reflection electrode, which is held in the interval; wherein the electro-optic body has a laminated structure of a guest-host liquid crystal layer and an optical thin film layer, the guest-host liquid crystal layer containing liquid crystal molecules uniformly oriented along the transparent electrodes and molecules of a dichroic dye, and the optical thin film layer having a specified anisotropic optical axis and being formed along the reflection electrodes; the liquid crystal layer is changed between an absorption state and a transmission state in response to a voltage applied thereto; and the liquid crystal layer in the absorption state substantially absorbs a first oscillating component contained in an incident light and substantially passes a second oscillating component perpendicular to the first oscillating component, while the liquid crystal layer in the transmission state substantially passes both the first and second oscillating components; and the optical thin film layer is interposed in a going/returning pathway of the second oscillating component which goes along the pathway, being reflected by the reflection electrode, and returns along the pathway; and the optical thin film layer converts the second oscillating component into a first oscillating component perpendicular to the second oscillating component and allows the first oscillating component thus converted to re-enter the liquid crystal layer in the absorption state.

According to a second aspect of the present invention, there is provided a reflection type guest-host liquid crystal display including: a first substrate for receiving an incident light, which has a counter electrode composed of a transparent electrode formed over the entire surface of the first substrate; a second substrate disposed opposite to the first substrate at a specified interval, which has pixel electrodes composed of reflection electrodes arranged in a matrix and switching elements for individually driving the pixel electrodes; and an electro-optic body for performing light modulation in response to a voltage applied between the transparent electrode and the reflection electrode, which is held in the interval; wherein the electro-optic body has a laminated structure of a guest-host liquid crystal layer and an optical thin film layer, the guest-host liquid crystal layer containing liquid crystal molecules uniformly oriented along the transparent electrode and molecules of a dichroic dye, and the optical thin film layer having a specified anisotropic optical axis and being formed along the reflection electrodes; the liquid crystal layer is changed between an absorption state and a transmission state in response to a voltage applied thereto; and the liquid crystal layer in the absorption state substantially absorbs a first oscillating component contained in an incident light and substantially passes a second oscillating component perpendicular to the first oscillating component, while the liquid crystal layer in the transmission state substantially passes both the first and second oscillating components; and the optical thin film layer is interposed in a going/returning pathway of the second oscillating component which goes along the pathway, being reflected by the reflection electrodes, and returns along the pathway; and the optical thin film layer converts the second oscillating component into a first oscillating component perpendicular to the second oscillating component and allows the first oscillating component thus converted to re-enter the liquid crystal layer in the absorption state.

Preferably, the above optical thin film layer functions as a quarter-wave plate, and has an anisotropic optical axis crossing the orientation of liquid crystal molecules of the liquid crystal layer in the absorption state at an angle of 45°.

The above optical thin film layer also preferably made of a polymer liquid crystal material containing liquid crystal molecules uniaxially oriented along the anisotropic optical axis of the polymer liquid crystal material.

Preferably, the optical thin film layer is made of a polymer liquid crystal material containing liquid crystal molecules uniaxially oriented along the anisotropic optical axis of the polymer liquid crystal material, a uniaxially oriented polymer film, or a low or high molecular weight thin film prepared by a Langmuir-Blodgett method.

An oscillating component along the orientation of molecules of a liquid crystal in the absorption state is absorbed by molecules of a dichroic dye which are oriented in the same orientation as that of the molecules of the liquid crystal. On the contrary, an oscillating component perpendicular thereto crosses the orientation of the molecules of the dye and thereby it is little absorbed by the molecules of the dye, that is, it is little subjected to light modulation. According to the present invention, however, such an oscillating component passes through the liquid crystal layer, entering an optical thin film layer, being further reflected by a reflection electrode, and passes through the optical thin film layer again. In other words, the oscillating component passes twice through the optical thin film layer functioning as a quarter-wave plate, and thereby it is rotated in oscillating direction (polarizing direction) by 90°. The orientation of the oscillating component thus corresponds to the orientation of molecules of the liquid crystal in the absorption state, and thereby the oscillating component is absorbed by the dichroic dye. In this way, all of the oscillating components contained in an incident light are necessarily absorbed in either the going path or the returning path, to thereby eliminate the polarizing plate provided outside the display. This makes it possible to obtain a contrast substantially equal to that of a transmission type guest-host liquid crystal display with a polarizing plate even by eliminating the polarizing plate.

According to the present invention, the polarizing plate can be eliminated by incorporating reflection electrodes in a guest-host liquid crystal display and covering the reflection electrodes with an optical thin film layer. Layers over the reflection electrodes must be light-transmissive but layers under the reflection electrodes must not be light-transmissive. Accordingly, even when reflection electrodes composed of pixel electrodes arranged in a matrix are provided and thin film transistors functioning as switching elements are integratedly formed on the lower portions of the pixel electrodes, no adverse effect is exerted on the aperture ratio of the pixels. With the structure of the present invention, the availability of an incident light can be significantly improved because all layers over the reflection electrodes can be wholly used as a display region.

### BRIEF DESCRIPTION OF THE DRAWINGS

Fig. 1A is a typical sectional view of a first embodiment of a reflection type guest-host liquid crystal display of the present invention;
Fig. 1B is a typical plan view of the first embodiment shown in Fig. 1A;
Fig. 2 is a partial sectional view illustrating the operation of the first embodiment shown in Figs. 1A and 1B;
Figs. 3A to 3D are process diagrams showing a method of forming an optical thin film layer used for the first embodiment shown in Figs. 1A and 1B;
Fig. 4 is a typical diagram showing one example of a polymer liquid crystal forming the optical thin film layer;
Figs. 5A to 5D are diagrams illustrating another method of forming the optical thin film layer;
Fig. 6 is a typical sectional view of a second embodiment of the reflection type guest-host liquid crystal display of the present invention; and
Figs. 7A and 7B are typical views showing a guest-host liquid crystal display according to a related art.

### DETAILED DESCRIPTION OF THE PREFERRED EMBODIMENTS

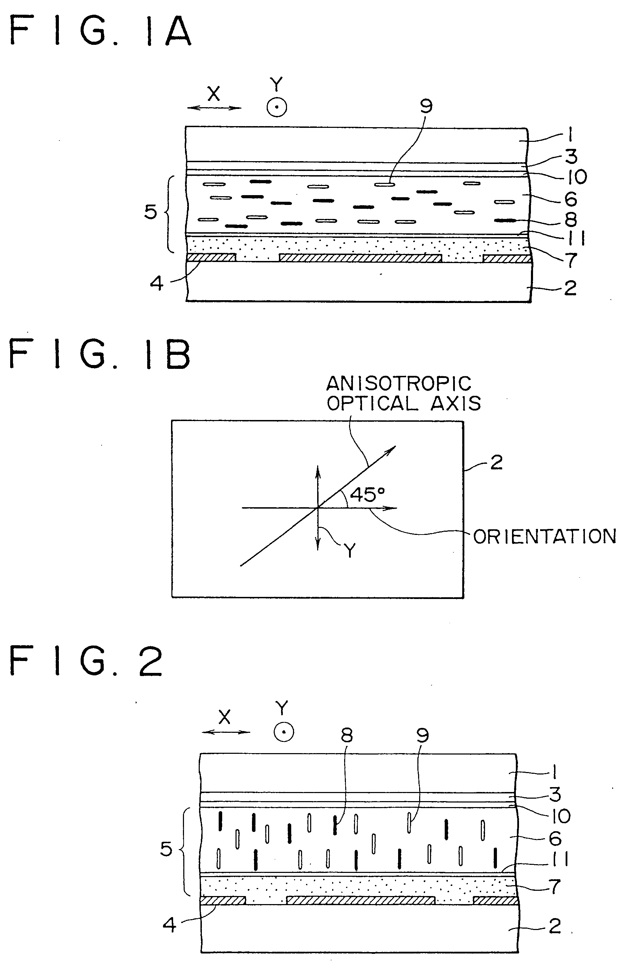

Hereinafter, preferred embodiments of the present invention will be described in detail with reference to the drawings. Figs. 1A and 1B show a first embodiment of a reflection type guest-host liquid crystal display of the present invention. Referring to Fig. 1A, the display of the present invention has an upper substrate 1 and a lower substrate 2. The upper substrate 1, which is made of glass or the like, is formed with transparent electrodes 3 and receives an incident light. The transparent electrodes 3 are patterned, for example, into stripes along rows. The lower substrate 2 is formed with reflection electrodes 4 which are patterned, for example, into stripes along columns. The transparent electrodes 3 thus cross the reflection electrodes 4 in a matrix, to form a simple matrix type liquid crystal display. The lower substrate 2 is opposed to the upper substrate 1 in such a manner as to be spaced at a specified interval. An electro-optic body 5 is held in the interval between the substrates 1 and 2 and performs light modulation of an incident light in response to a voltage applied between the transparent electrode 3 and the reflection electrode 4. The electro-optic body 5 has a laminated structure of a guest-host liquid crystal layer 6 and an optical thin film layer 7. The liquid crystal layer 6 contains liquid crystal molecules uniformly oriented along the transparent electrodes 3 and molecules of a dichroic dye 8. The optical thin film layer 7 has a specified anisotropic optical axis, and is formed along the reflection electrodes 4.

The liquid crystal layer 6 is changed into an absorption state and a transmission state. Fig. 1A shows the liquid crystal layer 6 in the absorption state, which substantially absorbs a first oscillating component X contained in an incident light and substantially passes a second oscillating component perpendicular to the first oscillating component. On the contrary, the liquid crystal layer in the transmission state substantially passes both the first and second oscillating components X and Y. As shown in Fig. 1A, nematic liquid crystal molecules 9 in the absorption state are oriented in the horizontal direction, and thereby molecules of the dichroic dye 8 are also oriented in the horizontal direction. In this embodiment, the liquid crystal layer 6 exhibits the absorption state when no voltage is applied, and it is changed into the transmission state when a voltage is applied. For satisfying such a condition, the nematic liquid crystal molecules 9 are selected to have a positive dielectric anisotropy and are previously controlled to be oriented in the horizontal direction (homogeneously oriented) by upper and lower orientation films 10 and 11. The liquid crystal layer 6 can also exhibit the absorption state shown in Fig. 1A when a voltage is applied. For satisfying such a condition, the nematic liquid crystal molecules 9 are selected to have a negative dielectric anisotropy. The optical thin film layer 7 is interposed in a going/returning path of the second oscillating component Y which goes along the going path, being reflected by the reflection electrode 4, and returns along the returning path. The optical thin film layer 7 converts the second oscillating component Y into a first oscillating component and allows the first oscillating component thus converted to re-enter the liquid crystal layer 6 in the absorption state.

The optical thin film layer 7 functions as a quarter-wave plate. As shown in Fig. 1B, the anisotropic optical axis of the optical thin film layer 7 crosses the orientation of molecules of the liquid crystal layer in the absorption state at an angle of 45°. The second oscillating component Y (linearly polarized component) transmitting through the liquid crystal layer 6 in the absorption state is perpendicular to the orientation of the liquid crystal. Also, the second oscillating component Y crosses the anisotropic optical axis of the optical thin film layer 7 at an angle of 45°. The second oscillating component Y (linearly polarized component) is converted into a circularly polarized component by transmitting through the quarter-wave plate. The circularly polarized component is reflected by the reflection electrode and then enter the quarter-wave plate again, to be converted into a linearly polarized component (first oscillating component X) perpendicular to the second oscillating component Y. In this way, the first oscillating component X thus converted is absorbed by the liquid crystal layer 6 in the absorption state.

Fig. 2 shows a transmission state of the liquid crystal layer 6, in which the nematic liquid crystal molecules 9 are oriented in the vertical direction and thereby the molecules of the dichroic dye 8 are also oriented in the vertical direction. Accordingly, the liquid crystal layer 6 in the transmission state substantially passes the first and second oscillating components X and Y. The reflection light is not subjected to light modulation because only the first and second oscillating components are replaced with each other. The nematic liquid crystal molecules 9 having a positive dielectric anisotropy are raised in response to a voltage applied thereto and are oriented in the vertical direction. In addition, as described above, the nematic liquid crystal molecules 9 can be oriented in the vertical direction (homeotropically oriented) in the voltage not applied state by suitably selecting the materials of the orientation films 10 and 11. In this case, nematic liquid crystal molecules 9 having a negative dielectric anisotropy are used, and are changed to be oriented in the horizontal direction in response to a voltage applied thereto. At this time, the nematic liquid crystal molecules 9 may be previously pre-tilted in the vertical oriented state for making constant the horizontal orientation.

The configuration of the first embodiment will be described in detail with reference to Figs. 1A, 1B and Fig. 2. In the liquid crystal display of the present invention, the liquid crystal layer 6 is made of the nematic liquid crystal molecules 9 added with a dichroic dye 8 having a color such as black. Molecules of the liquid crystal layer 6 mixed with the dichroic dye 8 are orientated in the horizontal or vertical direction. The reflection electrodes 4 are formed of a film of a metal having a high reflectivity such as aluminum or silver. Accordingly, the display is of a reflection type. The transparent optical thin film layer 7 capable of imparting a phase difference of λ/4 to a wavelength in the visible region (400 to 700 nm) is formed on the reflection electrodes 4. When the liquid crystal layer 6 is in the horizontal orientation, the optical anisotropy of the optical thin film layer 7 is tiled at an angle of 45° to the orientation of the liquid crystal layer 6. When the liquid crystal layer 6 is previously in the vertical orientation, the optical anisotropy of the optical thin film layer 7 is tiled at an angle of 45° to the cosine direction of the liquid crystal molecules 9 having a pre-tilt angle. The optical thin film layer 7 is made of a polymer liquid crystal material containing liquid crystal molecules uniaxially orientated along the optical anisotropy of the optical thin film layer 7. The optical thin film layer 7 may be formed of an optical uniaxial high or low molecular weight film prepared by a Langmuir-Blodgett method (hereinafter, referred to as "LB method"). It may be also formed of an optical uniaxial thin film of a mixture of a polymer and liquid crystal molecules.

The action of the reflection type guest-host liquid crystal display of the present invention will be described in detail with reference to Figs. 1A, 1B and Fig. 2. When a light enters the display in the horizontal orientation state shown in Fig. 1A, the incident light can be divided into a first oscillating component X and a second oscillating component Y which are polarized components perpendicular to each other. The first oscillating component X, which is oriented in the same direction as that of molecules of the liquid crystal layer 6, is absorbed by molecules of the dichroic dye 8 oriented in the same direction. On the contrary, the second oscillating component Y, which is perpendicular to the orientation of the molecules of the dye, is not absorbed by the dye at all. Accordingly, the second oscillating component Y passes through the liquid crystal layer 6, entering the optical thin film layer 7 functioning as a quarter-wave plate, being then reflected by the reflection electrode 4, and passes through the optical thin film layer 7 again. The second oscillating component Y thus passes twice through the optical thin film layer 7 in the going and returning paths, and is rotated by 90° in the polarizing direction (that is, the orientation thereof corresponds to that of the liquid crystal layer 6) and thereby it is absorbed by the liquid crystal layer 6. In this way, all of the oscillating components contained in an incident light can be absorbed by the liquid crystal layer 6 in either the going path or the returning path. As a result, it is possible to obtain a contrast comparable to that of a transmission type guest-host liquid crystal display with a polarizing plate, without provision any polarizing plate.

The feature of the present invention is to form a uniaxial anisotropic optical thin film layer functioning as a quarter-wave plate on the reflection electrodes. Various methods have been known for forming such a uniaxial anisotropic optical thin film layer. For example, a polymer liquid crystal material (aromatic polyester, siloxane resin or the like as a liquid crystal polymer) is arranged on a substrate at a temperature forming a nematic layer or smectic A layer and is then solidified by cooling it to room temperature, to obtain a uniaxial anisotropic optical thin film layer. Moreover, a polymer having a birefringence (acrylstyrene resin or polycarbonate resin) is arranged on a substrate by the LB method, to form an optical thin film layer (λ/4 layer) having an anisotropic optical axis which functions as a quarter-wave plate. In addition, a liquid crystal polymer is injected on a substrate at a temperature forming a nematic layer or smectic A layer, and is mechanically arranged using a squeegee, to form a λ/4 layer. According to the present invention, a desirable optical thin film layer is formed on the reflection electrodes using either of the above-described λ/4 layer forming methods. The film thickness of the λ/4 layer can be sufficiently reduced by forming the λ/4 layer using a polymer having a high anisotropy of refraction factor (Δn). The λ/4 layer can be thus formed on the reflection electrodes by a coating method, to thereby simplify the manufacturing processes of the display.

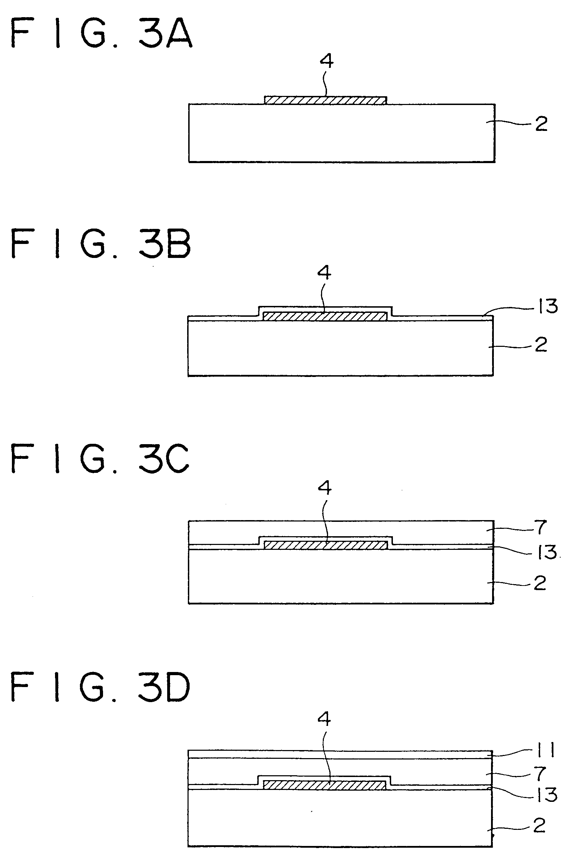

The method of forming the optical thin film layer 7 will be described in detail with reference to Figs. 3A to 3D. Here, the optical thin film layer is formed of a polymer liquid crystal material containing liquid crystal molecules uniaxially oriented along the anisotropic optical axis. First, as shown in Fig. 3A, a substrate 2 made of glass is cleaned and then a metal film is formed on the surface of the substrate 2 by sputtering or vacuum deposition. The metal film is patterned in a specified shape, to form reflection electrodes 4. The surfaces of the reflection electrodes 4 are then covered with an underlayer orientation film 13 as shown in Fig. 3B. The underlayer orientation film 13 is subjected to rubbing along a specified direction. The underlayer orientation film 13 is covered with a polymer liquid crystal as shown in Fig. 3C. The polymer liquid crystal is for example of a side chain type having pendants of mesogen groups of a benzoic ester system. The polymer liquid crystal is dissolved, in an amount of from 3 to 5 wt%, in a mixed solution of cyclohexane and methyl ethyl ketone in a ratio of 8 : 2. The solution is spin-coated on the underlayer orientation film 13 at a rotational speed of, for example, 1000 rpm, to form a film of polymer liquid crystal. The polymer liquid crystal is then heated once to an optically isotropic phase by heating the substrate, and gradually cooled to room temperature by way of a nematic phase. The polymer liquid crystal in the nematic phase has a desirable uniaxial anisotropy, that is, molecules of the liquid crystal are oriented along the rubbing direction of the underlayer orientation film 13. The uniaxial anisotropy in the nematic phase is fixed by cooling the substrate 2 to room temperature. Liquid crystal molecules contained in the polymer liquid crystal are uniaxially oriented by such annealing, to obtain a desirable optical thin film layer 7. Finally, an orientation film 11 is formed on the optical thin film layer 7 as shown in Fig. 3D. The orientation film 11 is subjected to rubbing along a specified direction. The orientation film 11 allows a guest-host liquid crystal layer 6 formed thereon to be oriented in the horizontal direction and also it functions as a blocking layer between the polymer liquid crystal of the optical thin film layer 7 and the guest-host liquid crystal of the liquid crystal layer 6. The rubbing direction of the orientation film 11 crosses the rubbing direction of the underlayer orientation film 13 at an angle of 45°.

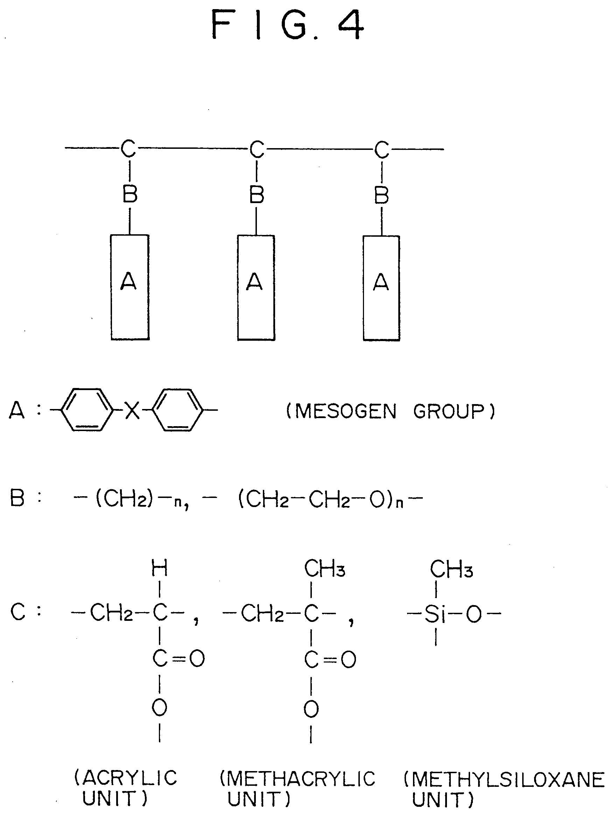

One example of the polymer liquid crystal will be described with reference Fig. 4. As shown in Fig. 4, the polymer liquid crystal contains rigid mesogen groups (liquid crystal forming groups) A, like the chemical structure of a core portion of a low molecular weight liquid crystal. The mesogen groups A are connected to main chains C of a polymer having structural units such as acrylic, methacrylic or methylsiloxane units through flexuous side chains B (for example, polyethylene or polyoxyethylene chains). Such a structure is called a side chain type polymer liquid crystal having pendants of mesogen groups. The polymer liquid crystal exhibits a nematic, smectic or cholesteric phase depending on the structure, like the low molecular weight liquid crystal. In general, the liquid crystal temperature range of the polymer liquid crystal is usually higher than that of the low molecular weight liquid crystal, and the phase transformation temperature of the polymer liquid crystal is increased with the molecular weight. The liquid crystal temperature range can be lowered by introducing siloxane bonding to main chains of the side chain type polymer liquid crystal.

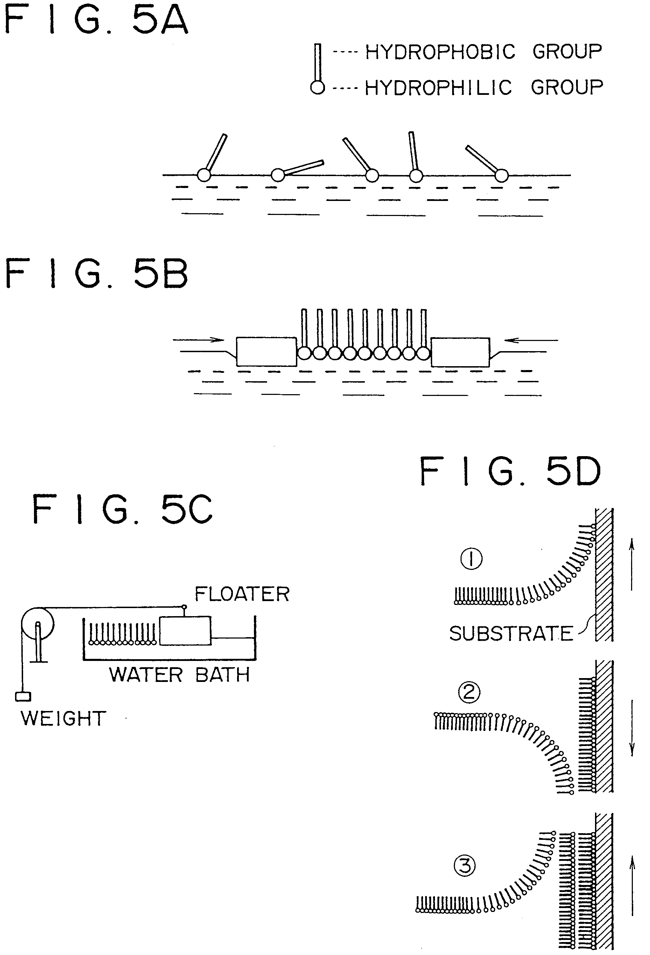

Figs. 5A to 5D show one example of forming an optical thin film layer having a uniaxial anisotropy using the LB method. Organic molecules are absorbed on a water surface to form a layer having a thickness of one molecule, that is, a monomolecular layer. The monomolecular layers thus obtained are sequentially laminated on the surface of a solid, to thereby form a thin film. Such a method is called a monomolecular layer laminating method, or LB method. In general, a film forming material has the form of a surface-active molecule composed of a polar portion called a hydrophilic group and a nonpolar group called a hydrophobic group. Molecules, each having a good balance of both the portions, form an absorbed monomolecular layer when they are developed on a water surface. When molecules are scattered as shown in Fig. 5A, they form a two-dimensional gas film. When molecules are compressed by moving partitioning plates to each other as shown in Fig. 5B, the surface pressure applied to the molecules is increased, to form a two dimensional condensed film. The development of the film forming material is performed by various methods. A typical development method is to use a volatile organic solvent. When a solution containing a film forming material and a volatile organic solvent is dropped on a water surface, the droplet covers the water surface and molecules of the film forming material remain after volatilization of the solvent. A surface pressure is then applied to a monomolecular layer on the water surface as shown in Fig. 5C, to form a condensed film. Next, as shown in Fig. 5D, a substrate is moved up and down while crossing the water surface, and thereby a monomolecular layer adheres on the substrate for each movement. As a result, a LB film thus obtained has a layer structure of two monomolecular layers as a unit. Such a lamination is called a Y-type method. In some cases, a monomolecular layer adheres on the substrate at the time of either pulling-up or dipping from the water. A λ/4 layer having an anisotropic optical axis can be formed on a substrate by arrangement of a polymer (acrylstyrene resin or polycarbonate resin) having birefringence on the substrate by the LB method.

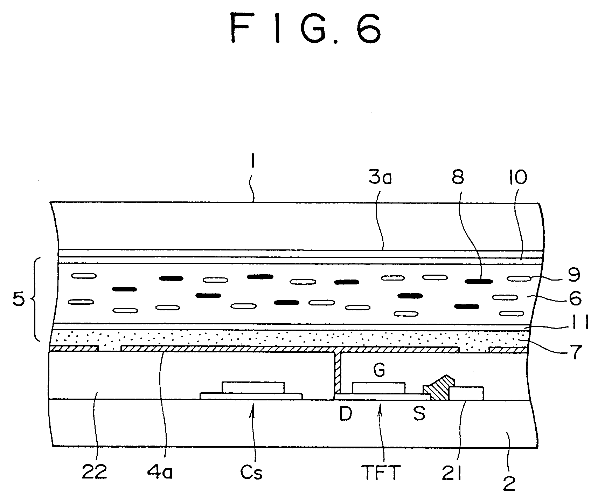

Fig. 6 is a typically partial sectional view showing a second embodiment of the reflection type guest-host liquid crystal display of the present invention. This embodiment is similar in basic configuration to the first embodiment shown in Figs. 1A and 1B, and therefore, corresponding parts are indicated by the same characters for a clearer understanding. Referring to Fig. 6, an upper substrate 1 has a counter electrode 3a composed of a transparent electrode formed over the entire surface of the upper substrate 1, and a lower substrate 2 has pixel electrodes 4a composed of reflection electrodes arranged in a matrix. Namely, although the first embodiment is of a simple matrix type, the second embodiment is of an active matrix type. Thin film transistors (TFTs) corresponding to the pixel electrodes 4a patterned in a matrix are also integratedly formed on the inner surface of the lower substrate 2 in addition to the pixel electrodes 4a. The TFTs function as switching elements for individually driving the pixel electrodes 4a. Specifically, a signal voltage is written in a pixel electrode 4a by selective on/off control of the TFT corresponding to the pixel electrode 4a. A drain region D of the TFT is connected to the pixel electrode 4a, and a source region S of the pixel electrode 4a is connected to a signal line 21. A gate electrode G of the TFT is continuous to a gate line. A holding capacitor Cs corresponding to each pixel electrode 4a is also formed. The pixel electrode 4a is electrically isolated from the TFT, holding capacitor Cs and signal line 21 by a planarization film 22. On the other hand, the counter electrode 3a is formed over the entire inner surface of the upper substrate 1. An electro-optic body 5 is held in an interval between the opposed substrate 1 and 2. When a signal voltage is written in the pixel electrode 4, an electric field is generated between the pixel electrode 4 and the counter electrode 3a, and thereby the electro-optic body 5 is changed between an absorption state and a transmission state. Such an optical change appears for each pixel electrode, to thereby display a specified image. The TFT, holding capacitor Cs and signal line 21 are disposed under the pixel electrode 4a. These components are not interposed in an incident light path, and thereby they do not exert any effect on the aperture ratio of the pixels. In other words, the areas of the pixel electrodes 4 are used as the aperture of the image, enabling an extremely bright display.

As described above, the present invention provides a reflection type guest-host liquid crystal display including reflection electrodes formed inside the display and an optical thin film layer functioning as a quarter-wave plate formed on the reflection electrodes. The anisotropic optical axis (optical main axis) of the optical thin film layer is tiled to the orientation of molecules of a guest-host liquid crystal at an angle of 45°. With this configuration, it becomes possible to increase brightness while ensuring a high contrast without provision of any polarizing plate.

While the preferred embodiments of the present invention have been described, such description is for illustrative purposes only, and it is to be understood that changes and variations may be made without departing from the spirit or scope of the following claims.

## Claims

1. A reflection type guest-host liquid crystal display comprising:
a first substrate for receiving an incident light, which has transparent electrodes formed thereon;
a second substrate disposed opposite to said first substrate at a specified interval, which has reflection electrodes formed thereon; and
an electro-optic body for performing light modulation in response to a voltage applied between said transparent electrode and said reflection electrode, which is held in said interval;
wherein said electro-optic body has a laminated structure of a guest-host liquid crystal layer and an optical thin film layer, said guest-host liquid crystal layer containing liquid crystal molecules uniformly oriented along said transparent electrodes and molecules of a dichroic dye, and said optical thin film layer having a specified anisotropic optical axis and being formed along said reflection electrodes;
said liquid crystal layer is changed between an absorption state and a transmission state in response to a voltage applied thereto; and said liquid crystal layer in the absorption state substantially absorbs a first oscillating component contained in an incident light and substantially passes a second oscillating component perpendicular to the first oscillating component, while said liquid crystal layer in the transmission state substantially passes both the first and second oscillating components; and
said optical thin film layer is interposed in a going/returning pathway of the second oscillating component which goes along the pathway, being reflected by said reflection electrode, and returns along the pathway; and said optical thin film layer converts the second oscillating component into a first oscillating component perpendicular to the second oscillating component and allows the first oscillating component thus converted to re-enter said liquid crystal layer in the absorption state.

2. A reflection type guest-host liquid crystal display according to claim 1, wherein said optical thin film layer functions as a quarter-wave plate, and has an anisotropic optical axis crossing the orientation of liquid crystal molecules of said liquid crystal layer in the absorption state at an angle of 45°.

3. A reflection type guest-host liquid crystal display according to claim 1, wherein said optical thin film layer is made of a polymer liquid crystal material containing liquid crystal molecules uniaxially oriented along the anisotropic optical axis of the polymer liquid crystal material.

4. A reflection type guest-host liquid crystal display according to claim 1, wherein said first substrate has a counter electrode composed of a transparent electrode formed over the entire surface of said first substrate; and said second substrate has pixel electrodes composed of reflection electrodes arranged in a matrix and switching elements for individually driving said pixel electrodes.

5. A reflection type guest-host liquid crystal display according to claim 1, wherein said optical thin film layer is made of a polymer liquid crystal material containing liquid crystal molecules uniaxially oriented along the anisotropic optical axis of the polymer liquid crystal material, a uniaxially oriented polymer film, or a low or high molecular thin film prepared by a Langmuir-Blodgett method.

6. A reflection type guest-host liquid crystal display comprising:
a first substrate for receiving an incident light, which has a counter electrode composed of a transparent electrode formed over the entire surface of said first substrate;
a second substrate disposed opposite to said first substrate at a specified interval, which has pixel electrodes composed of reflection electrodes arranged in a matrix and switching elements for individually driving said pixel electrodes; and
an electro-optic body for performing light modulation in response to a voltage applied between said transparent electrode and said reflection electrode, which is held in said interval;
wherein said electro-optic body has a laminated structure of a guest-host liquid crystal layer and an optical thin film layer, said guest-host liquid crystal layer containing liquid crystal molecules uniformly oriented along said transparent electrode and molecules of a dichroic dye, and said optical thin film layer having a specified anisotropic optical axis and being formed along said reflection electrodes;
said liquid crystal layer is changed between an absorption state and a transmission state in response to a voltage applied thereto; and said liquid crystal layer in the absorption state substantially absorbs a first oscillating component contained in an incident light and substantially passes a second oscillating component perpendicular to the first oscillating component, while said liquid crystal layer in the transmission state substantially passes both the first and second oscillating components; and
said optical thin film layer is interposed in a going/returning pathway of the second oscillating component which goes along the pathway, being reflected by said reflection electrodes, and returns along the pathway; and said optical thin film layer converts the second oscillating component into a first oscillating component perpendicular to the second oscillating component and allows the first oscillating component thus converted to re-enter said liquid crystal layer in the absorption state.

7. A reflection type guest-host liquid crystal display according to claim 6, wherein said optical thin film layer functions as a quarter-wave plate, and has an anisotropic optical axis crossing the orientation of liquid crystal molecules of said liquid crystal layer in the absorption state at an angle of 45°.

8. A reflection type guest-host liquid crystal display according to claim 6, wherein said optical thin film layer is made of a polymer liquid crystal material containing liquid crystal molecules uniaxially oriented along the anisotropic optical axis of the polymer liquid crystal material.

9. A reflection type guest-host liquid crystal display according to claim 6, wherein said optical thin film layer is made of a polymer liquid crystal material containing liquid crystal molecules uniaxially oriented along the anisotropic optical axis of the polymer liquid crystal material, a uniaxially oriented polymer film, or a low or high molecular thin film prepared by a Langmuir-Blodgett method.
